# EUROPEAN PATENT APPLICATION

(11) **EP 3 723 009 A1**
(43) Date of publication of application: **14.10.2020**
(21) Application number: 19186131.9
(22) Date of filing: 12.07.2019
(51) Int. Cl.: G06Q 10/00, G06Q 10/08

(54) **IDENTITY MANAGEMENT SYSTEM AND METHOD**

(30) Priority: 11.04.2019 GB 201905180
(71) Applicant: Sita Advanced Travel Solutions Limited, Aldershot, Hampshire GU11 1PZ (GB)
(72) Inventor: Callaghan, Sean Michael, Aldershot, Hampshire GU11 1PZ (GB)
(74) Representative: Bentall, Mark James

(57) **Abstract**

An identity management platform comprises a cloud based API layer, an identity service and an ABIS biometric service. The identity service acts as a broker engine integrating travellers, operators, airports and governments, enabling the sharing of identities. The identity service manages travellers' identities and enrols travellers, receiving biometric information and assigning unique identifiers to travellers. A biometric service communicates with the identity service and receives biometric data such as facial data from a traveller's identity document. They also receive biometric data which is supplied by the traveller, for example by taking a photograph at the airport. The ABIS matches the two sets of biometric data and, if the match is successful, associates the unique ID generated for the traveller with the biometric data captured by the traveller. This combination of biometric data may be used to verify the identity of the traveller throughout their journey, both at the port of embarcation and the destination port and any transit ports.

## Description

### FIELD OF THE INVENTION

This invention relates to identity management and to the enrolment of travellers into an identity management system to assist in travel across national borders.

### BACKGROUND TO THE INVENTION

Within the air transportation industry there are initiatives to stream line passenger journeys through airports and other points of departure and arrival. One such initiative, known as One ID has been launched by The International Air Travel Association (IATA) and seeks to promote a document-free process based on identity managements and biometric recognitions. Under the scheme passengers will be able to identify themselves at each airport touchpoint through a simple biometric recognition. The ultimate objective is to achieve an interoperable system coordination between airports, airlines and governments. The One ID initiative is published at https://www.iata.org/whatwedo/passenger/Pages/one-id.aspx

It is a well understood problem that repetitive identity checks at airports and other points of departure and arrival cause delays to passengers and introduce cost for operators. At present passengers have to identify themselves on multiple occasions with multiple documents, for example on check-in, at baggage drop, at boarding pass check and at passport control. It has long been a desire of the aviation industry to introduce a robust integrated identity management across the end-to-end passenger process that allows an individual to assert their identity online or in person. Under the One ID initiative, this should be done to the required level at every process step while maintaining the privacy of personal data.

For passengers the initiative would bring a seamless experience which involves a single identification and improve the overall passenger experience. With a single identification passengers may be recognised by all service providers, eliminating repetitive processes and resulting in less queuing and reducing the time passengers need to allow to pass through an airport.

For airlines and airports, One ID improves staff productivity by reducing time spent on manual ID checks and provides real time visibility of where passengers are in the airport process. This may assist optimising airport space efficiency and may eventually enable airlines to benefit from all the passenger process improvements with happy customers, which, in turn, may translate into commercial opportunities.

For Governments the initiative promises enhanced security, enabling improvements in border, aviation and airport infrastructure security. It will help combat human trafficking and other cross-border criminal activities by reducing the possibility for individuals to cross borders under a false identity.

However, the One ID proposal is presently merely a statement of a desired outcome and the challenge to the airline industry is how to deliver the technical solutions that enable the aims of One ID to be realised. In practice, there are multiple identity management systems used with each airline or other operator, port and border security provider using their own identity management system. Parties are reluctant to share sensitive identity information and the numerous systems that exist do not communicate with each other. The present invention aims to address these problems.

### SUMMARY OF THE INVENTION

According to a first aspect of the invention there is provided a system for managing identities of travellers, comprising a platform for sharing of identities with a plurality of parties external to the system and comprising an identity application service for enrolling travellers receiving identity information from external providers and assigning unique identifiers to travellers; a biometric service in communication with the identity service for receiving biometric data from travellers' identity documents, and on enrolment of a traveller, performing a match with biometric data supplied by the traveller and the biometric data from the traveller's identity document, and if the match is successful, associating the traveller's ID with the biometric data supplied by the traveller; and an application programming interface (API) comprising a plurality of web services and an application software development kit, the API being open to approved parties external to the system.

Preferably, the identity application service, the biometric service and the API are hosted in the cloud. Preferably, the API and the identity application service are configured to generate an identity for a traveller on enrolment of that traveller, the identity being passed to the biometric service for association with traveller biometric data.

In a preferred embodiment, on enrolment of a traveller, the identity application service is configured to receive biometric data from an identity document of the traveller and biometric data captured by the traveller accessing the service, the identity application service further being configured to send the identity document biometric data and the captured biometric data to the biometric service for matching, and, on receipt of a match indication from the biometric service, to issue a unique identifier for the traveller and send the unique identifier to the biometric service for storage in association with the captured biometric data of the traveller.

Preferably, the identity document biometric data and the captured biometric data comprise at least one a facial image, fingerprint data, iris data and voice data.

In one preferred embodiment, the system comprises a kiosk, a self-service gate or an application running on a mobile device for capturing the identity document biometric data and the traveller's biometric data and sending the identity document biometric data and the captured biometric data to the API.

Preferably, the API includes one or more of an external identities API for sharing identities from identity providers external to the system with the identity service; a security check API for communication with automated self-service gates for submission of face image data or boarding pass information; a booking and check-in API for enrolment of travellers and for passing unique identifiers between external operators and the identity application; a transfer API for communicating matching data between the biometric service, the identity service and the traveller; a border check API for submission of identities to the identity service by approved immigration authorities.; and a boarding check API for face matching by automatic self-service boarding gates.

In one embodiment the match is a one-to-one match.

A second aspect of the invention provides a method of enrolling a traveller in an identity management system, the system comprising a platform for sharing of identities with a plurality of parties external to the system and comprising: an identity application service for enrolling travellers receiving identity information from external providers and assigning unique identifiers to travellers; a biometric service in communication with the identity service for receiving biometric data from travellers' identity documents, and on enrolment of a traveller, performing a match with biometric data supplied by the traveller and the biometric data from the traveller's identity document, and if the match is successful, associating the traveller's ID with the biometric data supplied by the traveller; and an application programming interface (API) comprising a plurality of web services and an application software development kit, the API being open to approved parties external to the system, the method comprising submitting biometric data from an identity document of a traveller to the API, submitting biometric data captured from the traveller to the API, performing a match between the biometric data from the identity document and the captured biometric data and, if the match is made, assigning a unique identifier to the traveller and storing the unique identifier with the captured biometric data.

In a preferred embodiment, the identity document biometric data and the captured biometric data are sent by the API to the biometric service and the match is performed by the biometric service, if the match is made, the identity service commits the captured biometric data to the biometric service and writes the unique identifier to the biometric service to create an association between the captured biometric data and the unique identifier.

Preferably, the biometric data from the identity document and the captured biometric data comprise at least one of facial data, fingerprint data, iris data or voice authentication data.

One preferred embodiment of the invention further comprises submitting traveller destination and/or transit port data to the API with the identity document biometric data and the captured biometric data, and sending the captured biometric data and associated unique identifier to the destination port and/or the transit port.

Preferably, prior to sending the captured biometric data and associated unique identifier to the destination port and/or the transit port, determining whether the destination port and/or the transit port is subscribed to the identity management system. The identity document biometric data may be read by a kiosk and communicated to the API and the traveller biometric data is captured by the kiosk and communicated to the API.

In one preferred embodiment, the traveller biometric data is captured by a camera in the kiosk or self-service gate.

In one embodiment, the identity document biometric data may be read by an application running on a mobile device and communicated to the API and the traveller biometric data is captured by the mobile device and communicated to the API. The traveller biometric data may be captured by a camera in the mobile device.

Embodiments of the invention may have the advantage of providing a platform for enrolling trusted biographic, biometric, identity sharing and publishing between parties. This enables a passenger to be recognised by all service providers at a port with a single identification, eliminating repetitive processes and resulting in less queuing and reducing the time passengers need to allow to pass through an airport. For the service provider such as an airport, embodiments of the invention may enable staff productivity to be improved by reducing time spent on manual ID checks and also provide real time visibility of where passengers are in the airport process, which in turn may assist optimising airport space efficiency. From the perspective of Governments, embodiments of the invention may assist enhanced security and improvements in border, aviation and airport infrastructure security.

### BRIEF DESCRIPTION OF DRAWINGS

Embodiments of the invention will now be described, by way of example only and with reference to the accompanying drawings in which:
- Figure 1: is a logical architecture overview of an embodiment of the invention;
- Figure 2: illustrates how the framework of figure 1 is used with a traveller checking-in;
- Figure 3: is a swim chart showing a traveller check-in and enrolment process
- Figure 4: is a swim chart illustrating the security check point work flow;
- Figure 5: is a swim chart illustrating the border check work flow;
- Figure 6: is a swim chart illustrating the boarding check work flow; and
- Figure 7: illustrates deployment of the identity and biometric services in the cloud.

Embodiments of the invention to be described provide a framework which allows which allows ports and other points of entry and departure, including but not limited to airports, sea ports, and land border operators to enrol and share traveller identities, or for travellers to push and share their identity from third party digital identity providers. The framework offers travellers the ability to submit biometric information to expedite the experience when passing through security, border checks, boarding at departure, transiting and arrival ports. The embodiments of the invention to be described provide a platform for enrolling trusted biographic, biometric, identity sharing and publishing between parties.

In the preferred embodiment to be described, as part of a framework a framework ID is provided to each traveller using an identity application and a software development kit (SDK) that operators and ports can use or embed within their own applications. In the preferred embodiment this is a module deployed and enabled in the system's Cloud application services.

A framework to be described and embodying the invention has the advantage that it allows a secure centralised identity solution following the IATA One ID concept, is GDPR compliant and secure. Traveller data can be sent to destination environments or submitted to other identity management providers that are approved and subscribe to the system.

The solution framework is built with web service APIs and SDKs that operators or subscribers use to access the system, which is hosted within the Cloud. This has the advantage of using the system APIs and SDKs which enable the system provider to maintain these and provide full customer integration support. Secure API keys provide system access to approved operators and subscribers.

Operators or subscribers can choose to embed the system SDK into solutions, such as mobile application devices, or use the system API web services to access the framework.

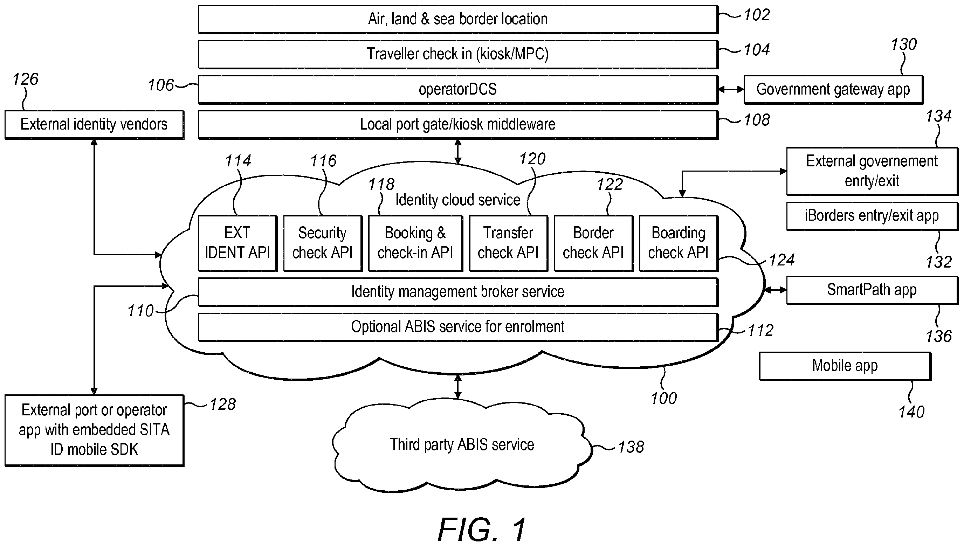

Figure 1 shows an overview of the logical architecture of the system. The core framework of the system is based in the cloud, shown generally at 100. The system provides a cloud based identity repository that can be accessed globally by interested and authorised parties including but not limited to governments, ports and operators. The framework shown enables identity sharing across one platform.

The system includes the following components all of which are integrated together. The port or other border is illustrated generally at 102. A traveller check-in is illustrated generally at 104. This may be a kiosk or mobile device application as is well known in the art or may be another type of check in application. The operator departure control system is shown at 106.

Departure control systems are well known in the art and used by airlines, ship operators and others to manage check-in of passengers and boarding of aircraft and ships. Local airport and seaport gates and kiosk middleware are illustrated at 108.

Within the cloud 100 reside a number of modules including APIs, an identity management service 110 and a biometric identification system 112. The APIs include an external identity API 114, a security check API 116, a booking and check in API 118, a transfer check API 120, a border check API 122 and a boarding check API 124. The web services APIs are published for third parties and the software development kit that integrates operators with the identity services is also available via the cloud. The APIs are preferably separate but need not be so. One reason for preferring separate APIs is to allow a given API to be taken down without affecting the rest of the system. Traveller identities may be stored on the system or may be stored remotely, for example on an individual traveller's mobile phone or other device.

The automated biometric identification service (ABIS) 112 hosted in the cloud 100 is a known system and used for large-scale biometric identification and deduplication. In this embodiment the ABIS performs a one-to-one comparison of biometric data received from a traveller against biometric data recorded in an identity document such as a passport, as is explained in more detail below.

Many forms of biometric identification may be used, such as, but not limited to, facial recognition, fingerprint recognition, voice authentication, and iris recognition. One suitable ABIS is Innovatrics ABIS, provided by Innovatics, s.r.o. of Bratislava, Slovak Republic. In the embodiment described, facial recognition is used.

As shown to the left of Figure 1, External Identity vendors 126 and external ports and operators, such as airlines and handling companies 128 having the system mobile software development kit embedded in applications can communicate with the system via the APIs and services hosted in the cloud. At 140 a mobile identification app is shown. A suitable mobile identity application is the SITA Digital Traveler Identity Application which is a mobile blockchain application available from SITA scrl. External identity vendors are system approved vendors that can subscribe and allow users' identities to be shared verified and submitted with the identification service 110.

Further components illustrated in Figure 1 that can integrate into the system include a government gateway 130 which is used by governments for travel authorisation; an iBorders ™ entry and exit application 132 which is a solution available from SITA scrl to help governments with a set of capabilities to provide information, intelligence and optimised interactions with travellers to make informed decisions regarding passenger entry and exit.

Also shown are government entry and exit applications 134 that are external to the system provider and SITA smart path ™ 136, an identity management solution available from SITA scrl that uses facial recognition to validate identities. Third party ABIS service 138 may also interact with the cloud services.

The framework of figure 1 enables operators or identity management providers to enrol traveller identities and biometrics. This is the first step in the process. Later, as a traveller pass through a port, these identities and biometrics are used to assist passage of the traveller through the port. Although not essential to the invention, they may also be sent to the traveller's destination port or transit port for identification of the traveller as the arrive at their destination or transit port so facilitating their passage through the transit port and/or the destination port.

Thus, as shown in figure 1, the platform comprises three core components:
The API which comprises a collection of web services and application SDKs which enables operators to develop their own applications efficiently and integrate them into the system framework of figure 1.

The identity management service which is cloud based and acts as the middle tier for API/SDK integrations, enrolment and a global container reference for travellers' UID and biometric identity. The service also provides a workflow engine and an external public user portal. The service is a rules engine which either stores identities or decides where to store them and which can be accessed through the APIs for assistance in identity verification.

The ABIS service that is also cloud based and stores biometric data for enrolled travellers, such as facial image and fingerprint biometrics each of which are associated with traveller UIDs.

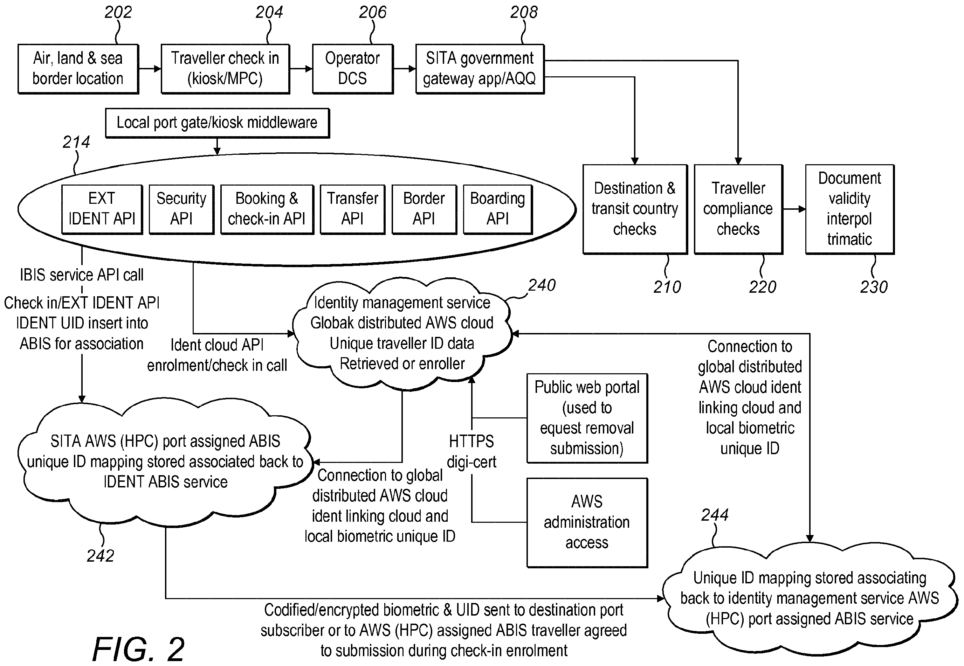

The platform is designed to enable third party digital identities to publish to the platform and integrate. Approved organisations may access the framework after carrying out travel authorisation compliance and performing enrolment, checking and sharing of identities or biometrics between departure, destination, transit and return. Figure 2 is a schematic showing an example of the framework being used with a traveller checking in, being enrolled and then the traveller UIDs being associated from the central system to the biometric data that is sent or shared with the destination. Thus the process illustrated allows the destination port to use full border automation during the entry process.

Thus, referring to figure 2, and using the same reference as figure 1, the process is integrated from end to end. It starts at a specific land, sea or air border 202 where a traveller checks in at 204 using a kiosk or mobile device as described above. The traveller communicates via the kiosk or mobile app with the operator's DCS at 206 and the DCS communicates in turn with a government gateway 208 which enables destination and transit country checks to be performed at 210 together with traveller compliance checks at 220 and validation of travel documents, which may include communicating with enforcement agencies such as Interpol at 230.

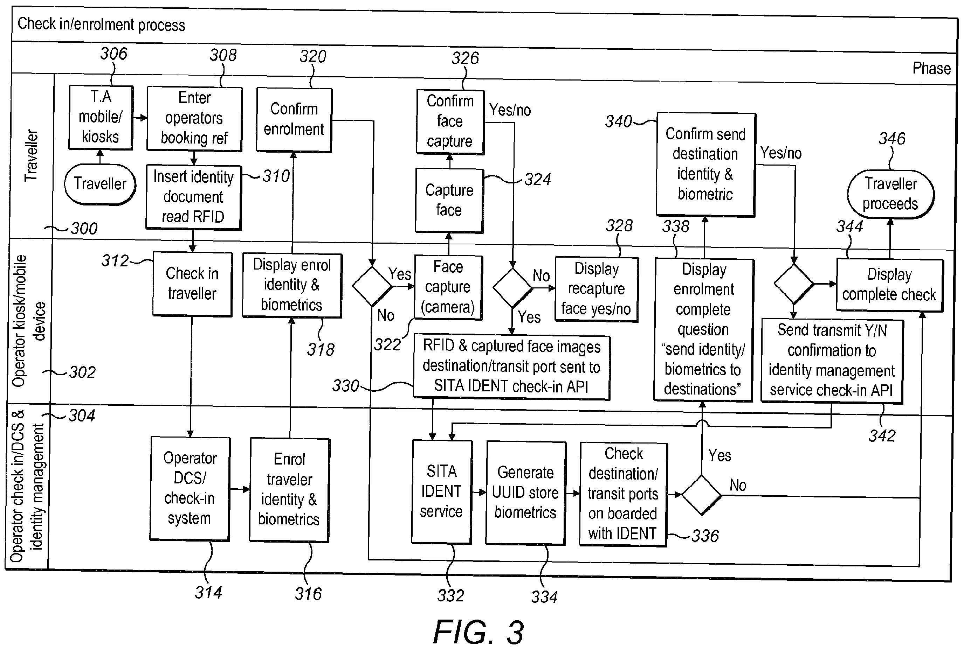

The local port Gate or Kiosk middleware communicates with the APIs residing in the cloud. When a traveller checks in, the External Identity API 214 makes an ABIS service API call and sends the traveller UID to the ABIS for association. This association is stored in the ABIS system, and the unique association is sent at 260 back to the identity ABIS service (112 Figure 1). The identity for an individual is illustrated generally by cloud 240. This identity is generated by the identity management service 110 in Figure 1 and either stored in a database forming a part of the identity management service or locally, for example on the mobile device of the identity owner. As shown in the schematic of Figure 2, this identity is either retrieved as part of an identity checking process or created when the traveller is enrolled, causing the identity to be generated for the first time. This process is described below with respect to Figure 3. The cloud 242 represents the biometric data that is associated with that user and which is stored by the biometric service, for example the traveller's photograph. If the destination port and the traveller have signed up to the system, cloud 244 illustrates how the unique traveller ID and the associated biometric data may be made available to the destination or transit port to facilitate the traveller's passage through that port.

The ABIS biometric system will now be described in more detail. The ABIS system is used to store encrypted/codified biometric data, for example but not limited to facial and fingerprint data, with a UID that associates the biometric ABIS system assigned to the port, back to the globally centralised identity system, thus associating the biometric data to the identity of the traveller.

The identity system of figure 1 can integrate with any commercially available ABIS system. Connection may be via a Java Web Service SDK is used to establish the integration. During the check in process, if the traveller agrees to enrol their identity and biometric, the traveller's digital RFID image from their travel document and face image is captured where the identity document is a passport having biometric data stored on a chip which can be read.

These images are then sent to the ABIS system via the Check-In API and the ABIS system will perform a 1 to 1 match. If the match is positive, the IDENT application service middle tier will commit the biometric identity to the ABIS system, write the UID to the ABIS system creating an association between the identity system and the Biometric record.

Once enrolled in the system, the traveller's identity can be matched through the port of departure, transit, destination or return.

Figure 3 shows an example of the check-in workflow process. Here traveller check-in and enrolment is shown. When a traveller checks in, for example for a flight, they are offered the opportunity to enrol in the identity management and biometrics services 110 and 112 (figure 1). Figure 3 is a swim lane diagram that shows steps performed by the traveller 300, the operator kiosk or mobile device 302 and the operators check-in and DCS system and the identity management system 304. At step 306, the traveller opens an application on a kiosk, for example at an airport or a similar application on their mobile phone. At step 308 they enter their booking reference for the flight, or other travel and at step 310 insert their identity document for reading data stored on an embedded RFID chip in the identity document, which may be a biometric passport or other suitable document.

At step 312, the kiosk or mobile device checks in the traveller and at step 314, the status of the traveller as checked-in is communicated to the airline DCS or check in system and the status of the traveller is updated to checked-in. The DCS now attempts, at step 216, to enrol the traveller onto the identity and biometrics services to enable them to benefit from the framework of figure 1 and to prevent the need to show repeatedly their identity document or other documents associated with their flight such as a boarding pass. The DCS communicates with the kiosk or mobile application, causing it to display to the traveller, a screen inviting them to enrol on the services and at step 320 the traveller provides an input which either confirms or denies their participation. If the traveller chooses to enrol, the kiosk or mobile device then activates its camera at step 322 to capture a photograph of the traveller's face. Control of the process is given to the traveller who, at step 324, takes the photograph, reviews it and either accepts it or rejects it at step 326. If the photograph is rejected, the kiosk or mobile application displays a message inviting the traveller, at step 328 to recapture the facial image. If the photograph is accepted the kiosk or mobile device 202, sends to the check-in API (118 in figure 1) the following information at step 330: data captured from the RFID chip read from the traveller's identity documents; the accepted facial image; the destination port and any transit port.

At the identity service, at step 332, the data is received from the kiosk or mobile device and at step 334 a UID (Unique User Identification) is generated and the received biometric data is stored. At step 336, a check is made that the stated destination and/or transit ports are subscribed to the service. If they are, the process proceeds to step 338 where the kiosk or mobile device displays to the traveller a message stating that the enrolment procedure has been completed and asking the traveller to confirm that the identity and biometric data may be sent to the destination port and/or any transit port or ports. The traveller then confirms or denies this request at step 340. Then at step 342 a yes/no confirmation is sent to the Check-in API which updates the identification service as to the traveller's preference. The kiosk or mobile app now displays to the traveller a message that the check-in procedure is complete and the traveller may then proceed at step 346.

If the traveller has declined to be enrolled then the process proceed from step 320 to completion of the check-in procedure at 344. In this case the traveller has checked into their flight but not enrolled in the identity and biometric service and so may have to show their identity document and/or other travel related documents such as a boarding pass before they can board their flight. If the check made at step 336 shows that the destination and/or one or more transit ports have not enrolled, the process also proceeds to step 344 and the traveller proceeds but may have to show identity documents at the unregistered destination port and/or transit port.

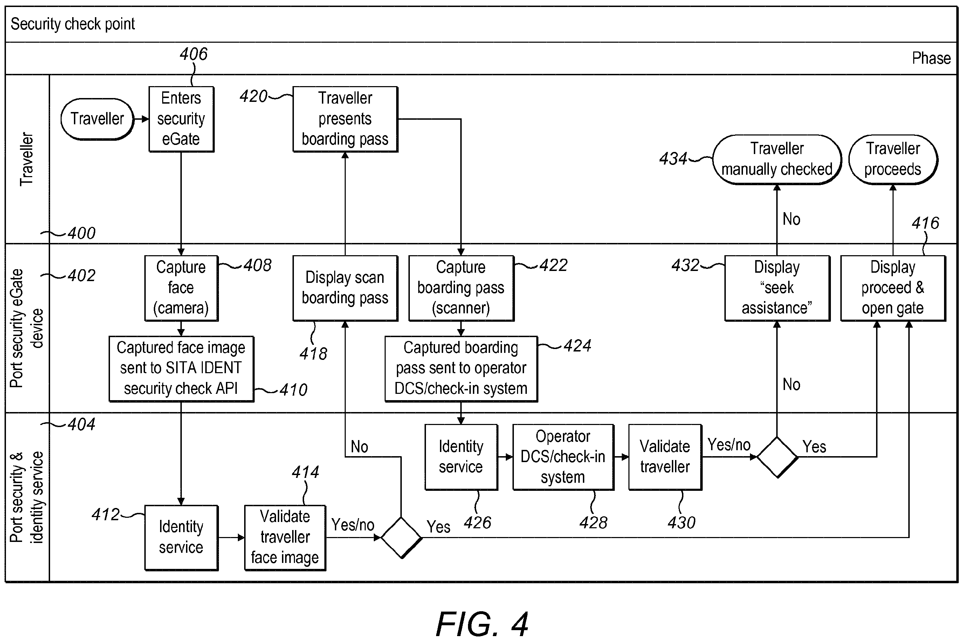

Figure 4 shows another example of a work flow. This example is of a security checkpoint, for example an eGate. An eGate, sometimes referred to as an ePassport gate is a self-service automated gate or barrier which uses passport or other ID scanning and facial recognition to determine whether to allow travellers to pass through the gate. eGates have been widely adopted in airports around the world and are commercially available, for example the SITA iBorders® BorderAutomation Gate provided by the applicant. The figure shows the steps performed by the Traveller 400, the Port Security eGate Device 402 and the Interactions between the Port Security and the Identity broker service of Figure 1.

At step 406, a traveller enters a security eGate. Once the gate has closed, at step 408, the camera that forms part of the eGate captures an image of the traveller's face. That captured facial image is sent to the security check API 116 (Figure 1) at step 410. At step 412, the captured facial image data is sent from the security API 116 to the Identity management service 110 (Figure 1). The Identity management service 110 then validates the traveller's facial image at step 414. If the image is validated, the process proceeds to step 416 at which a 'Proceed' message may be displayed to the traveller and the gate is opened permitting the traveller to exit the gate and continue with their journey.

If the facial image is not validated, the process continues to step 418 at which the display of the eGate displays a message to the traveller asking them to scan their boarding pass. At step 420 the traveller presents their boarding pass to a scanner of the eGate and at step 422 the scanner scans the boarding pass to capture data stored on that boarding pass. At step 424 the scanned boarding pass data is sent to the operator's departure control system (DCS) or their check-in system if the latter does not form part of the DCS. The DCS is an external system operated, typically by the airline or other operator to which the boarding pass relates but may be a third party, for example which provides DCS services to a number of smaller operators. At step 426, the DCS passes the captured boarding pass data to the identity management service 110, for example either via the security API 116 or the check-in API 118. This in turn may return a query to the DCS or check-in system at step 428 asking whether the passenger has checked-in. If they have, the traveller is validated at step 430. If validated, the process then continues to step 416 as above and the traveller can proceed. If the traveller is still not validated, at step 432, the display of the eGate displays a 'seek assistance' message and the gate remains closed. The process ends at step 434 with the traveller seeking manual assistance.

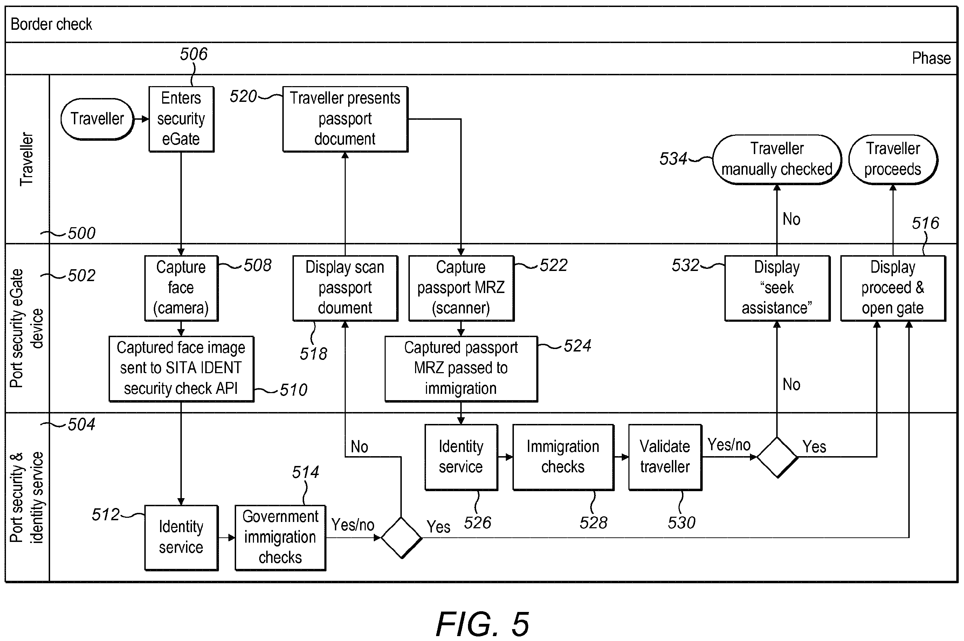

Figure 5 shows a similar workflow to Figure 4 but illustrates the border check procedure where the traveller is interacting with government border checks. Here the process steps are shown from the perspective of the traveller 500, the port security eGate device 502 and the operator's check-in or DCS and the identity service 504. The steps are, in essence, the same as those described with respect to figure 4 although some are performed by different entities. Thus, at step 506, a traveller enters a security eGate. Once the gate has closed, at step 508, the camera that forms part of the eGate captures an image of the traveller's face. That captured facial image is sent to the border check API 122 (Figure 1) at step 510. At step 512, the captured facial image data is sent from the border check API 122 to the Identity management service 110 (Figure 1). The relevant government then performs immigration checks at step 514. If the traveller is validated, the process proceeds to step 516 at which a 'Proceed' message may be displayed to the traveller and the gate is opened permitting the traveller to exit the gate and continue with their journey.

If the traveller does not pass the Government immigration checks, the process continues to step 518 at which the display of the eGate displays a message to the traveller asking them to scan their passport or other identity document. At step 520 the traveller presents their passport to a scanner of the eGate and at step 522 the scanner scans the passport to capture data stored on the MRZ (machine readable zone) of the passport. At step 524 the read MRZ data is sent to the government immigration service. At step 526, the immigration service passes the captured MRZ data to the identity management service 110, for example either via the border API 122. This in turn checks the identity of the traveller and returns a message to the immigration service which is used as a part of immigration checks performed at step 528. If these checks are passed, the traveller is validated at step 530. If validated, the process then continues to step 516 as above and the traveller can proceed. If the traveller is still not validated, at step 532, the display of the eGate displays a 'seek assistance' message and the gate remains closed. The process ends at step 534 with the traveller seeking manual assistance.

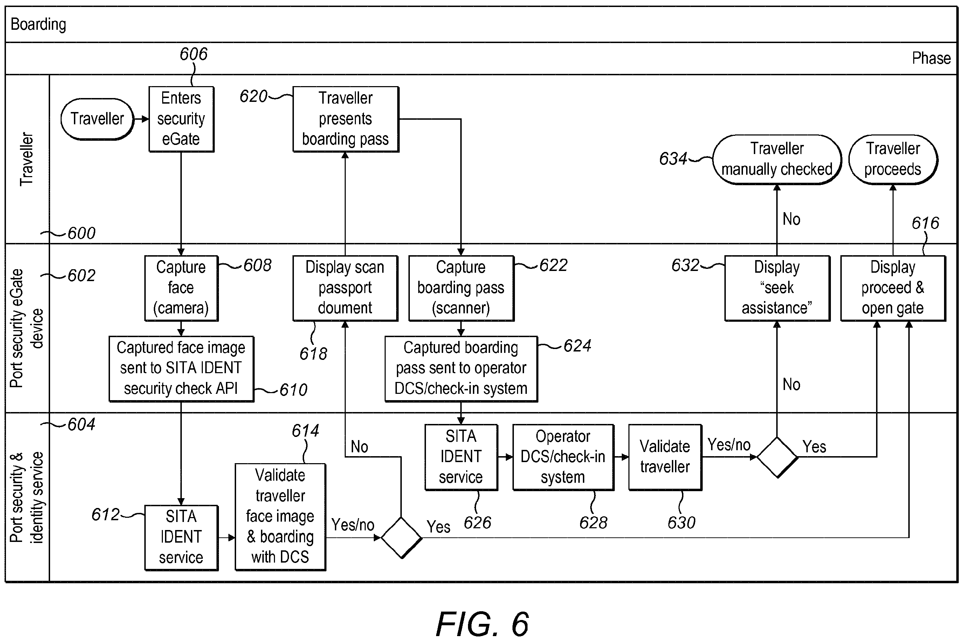

Figure 6 shows a similar workflow to Figures 4 and 5 but illustrates the boarding check procedure where the traveller is interacting with an airline or other transport operator as the board the craft. Here the process steps are shown from the perspective of the traveller 600, the port security eGate device 602 and the port security and the identity service 604. The steps are, in essence, the same as those described with respect to figure 4 although some are performed by different entities.

As with the previous examples, the process begins, at step 606, with a traveller entering a security eGate. Once the gate has closed, at step 608, the camera that forms part of the eGate captures an image of the traveller's face. That captured facial image is sent to the boarding check API 124 (Figure 1) at step 610. At step 612, the captured facial image data is sent from the security API 124 to the Identity management service 110 (Figure 1). The Identity management service 110 then validates the traveller's facial image and the passenger's permission to board with the operator's DCS at step 614. If the image is validated, the process proceeds to step 616 at which a 'Proceed' message may be displayed to the traveller and the gate is opened permitting the traveller to exit the gate and continue with their journey.

If the facial image or the right to board is not validated, the process continues to step 618 at which the display of the eGate displays a message to the traveller asking them to scan their boarding pass. At step 620 the traveller presents their boarding pass to a scanner of the eGate and at step 622 the scanner scans the boarding pass to capture data stored on that boarding pass. At step 624 the scanned boarding pass data is sent to the operator's departure control system (DCS) or their check-in system if the latter does not form part of the DCS. The DCS is an external system operated, typically by the airline or other operator to which the boarding pass relates but may be a third party, for example which provides DCS services to a number of smaller operators. At step 626, the DCS passes the captured boarding pass data to the identity management service 110, for example via the security API boarding API 124. This in turn may return a query to the DCS or check-in system at step 628 asking whether the passenger may proceed. If they can, the traveller is validated at step 630. If validated, the process then continues to step 616 as above and the traveller can proceed. If the traveller is still not validated, at step 632, the display of the eGate displays a 'seek assistance' message and the gate remains closed. The process ends at step 634 with the traveller seeking manual assistance.

The API and SDK layer in the cloud will now be described in more detail. This layer is shown in figure 1 and enables an open and common framework to be provided that has web service APIs and SDKs that are fully available to approved operators and third parties. The APIs shown in Figure 1 will now be described in more details.

### API

The embodiment of the system described provides six pre-defined APIs that have specific pre-defined calls for each phase of the passenger experience and execute system Middle Tier workflows. In other embodiments a different number of APIs may be used with each API serving a different function and this example is non-limiting. The APIs are broken out by design, to allow maintainability and in place production support and scalability. The APIs are deployed to different JVMs (Java Virtual Machines) in the Middle Tier for better Java heap usage and garbage collection within the JVM.

The communication between the SDK and system middle tier is via https, using SSL certificates that are on-boarded. The data transmitted is encrypted.

The functions of each API are shown in table 1 below.

**Table 1**

| **API NAME** | **DESCRIPTION** |
|---|---|
| EXT IDENT API 114 | Used by external identity providers to share identities with system |
| Security Check API 116 | Port border security check API used by Gates for submitting face image captured for matching or verifying Bar Coded Boarding Pass (BCBP) information against system |
| Booking & Check-in API 118 | Used by operators during booking or check in process to enrol identity, biometric, generate a UID from system and return UID to operator |
| Transfer API 120 | Match with system for a 1 to 1 face match, send back UID or traveller data API can receive BCBP and last PNR (Passenger Number) if required for finding UID and biometric |
| Border Check API 122 | Immigration Authority API for approved Government authorities to submit identity Yes / No validation requests or more detailed calls by those approved |
| Boarding Check API 124 | Boarding Check API used for face match by boarding Gates or to send BCBP to find traveller, load UID and biometric data for 1 to 1 match |

### SDK

The SDK is provided to the operators. It allows the operator to embed the SDK into their mobile application and use pre-defined calls to integrate with the system Middle Tier business logic.

The communication between the SDK and the system middle tier is via https, using SSL certificates that are on-boarded. Data transmitted is in encrypted form.

### REST & JSON

The API uses REST (Representational State Transfer) which is an architecture style , REST technology is generally preferred to the more robust Simple Object Access Protocol (SOAP) technology as REST leverages less bandwidth, making it more suitable for internet data transfer as REST supports JSON which is used in the solution, which is preferred to XML as it parses faster than XML. However these are matters of design choice and may be varied according to preference and the demands of a particular solution. None is essential to the invention.

### API KEYS

These keys are used for security and access control. Operators and subscribers are each assigned an X-API key which is unique. This key is transmitted during an API session initiation as part of the authentication and is validated by the system Middle Tier, Thus allowing for secure system access.

### SITA ID APP

As mentioned above the SITA ID is a digital identity application or SDK pack 128 (figure 1) provided by SITA scrl that can be embedded into an operator or port's application. SITA ID 128 is a commercially available application which uses blockchain technology and allows a traveller to create a digital identity and choose to share it with third parties such as the system. Thus, the operator or port using the application controls with whom they share their identity.

Once the SITA ID App 128 is downloaded to a traveller's mobile device, the traveller is automatically issued a digital ID that requires the traveller's data to be populated and the traveller to self-verify with a passcode. The traveller's data is populated with Machine-Readable Zone (MRZ) fields of the passport to pre-populate the metadata that describes the passport (or other travel document). The user is prompted to take a self-portrait (selfie). The selfie image along with the passport data is encrypted and stored locally. The app then obfuscates the traveller's data with hashes and digitally signs the data.

The traveller then chooses to share their data with the identity system service and initiates an identity verification handshake via blockchain. The data is then fully encrypted and placed into an envelope that is sent to the system backend. The identity of the system and the traveller are validated by the traveller public key that is sent to the backend and the hashes stored on the blockchain. Once validated, ports or operators can verify the traveller's identity by integrating with the system at the embarkation port and can be accessed if transit or destinations subscribe to the identity system service and the traveller allows for them to request verification.

### ID SDK

The ID SDK pack enables third party ports and operators to embed the ID management service into their own application. The Identity Management System provider can then provide full integration support and services to ports and operators.

### ID BLOCKCHAIN SECURITY

Data stored on the blockchain is immutable and cannot be hacked, modified or deleted. No PII is ever stored on the blockchain. The hashed data on the blockchain protects privacy, because it cannot be reverse engineered into the original data and can only be used, with a traveller's permission.

### External Identity Vendors.

Figure 1 shows how the system uses an identity service 110 which is resident in the cloud. The system may also interact with external identity vendors who can integrate either to provide a verification of their traveller or share their subscriber's data using the system, and integrate with the API web service 114.

Either the external identity vendor provides a validation / verification to the system or they submit the traveller data which is transmitted and held securely for a limited period of time. The traveller data can be held for a set period of time, to enable the traveller's journey to be completed.

It will be appreciated from the foregoing that the system stores personal data relating to travellers. In an embodiment, a public web portal is provided which gives travellers access and allows them to delete their data held on the system and request a copy of their data in any meaningful format.

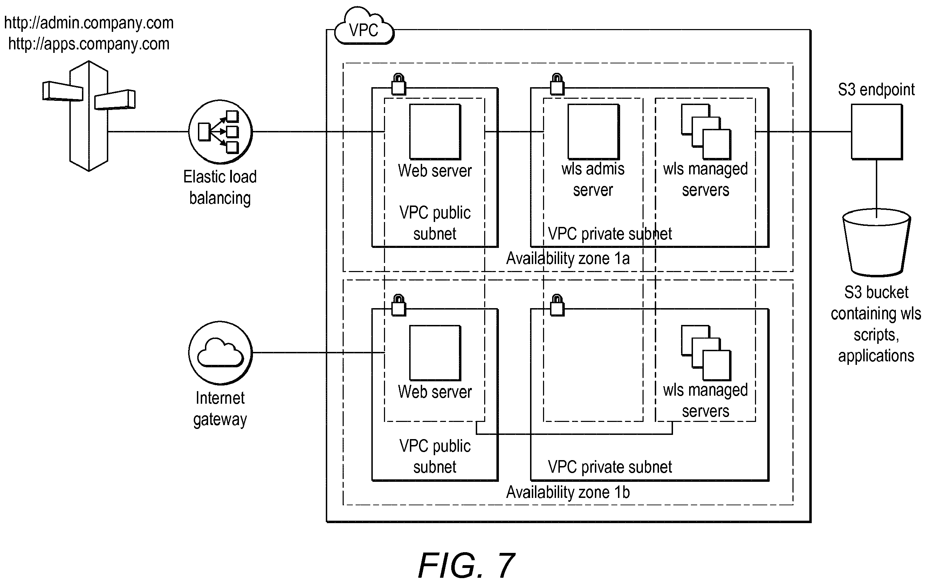

Figure 7 shows the Identity service AWS infrastructure layer view. The application and databases are secured within Virtual Private Clouds and those required components are exposed externally in a Public area behind network load balancers.

The application tiers of the identity service and ABIS biometric service are deployed for example, on the Amazon EC2 cloud and the database in the Amazon RDS cloud. The system is secure as the services are running within a VPC - Virtual Private Cloud; a virtualized network where the web servers are running in public subnets, with Internet routable IP addresses, while the application servers are running in private subnets where incoming traffic is allowed only from web servers on specific ports. Another layer of security exists in front of the web servers, where an ELB - Elastic Load Balancer is exposed on the Internet.

The system has high availability as all services are spread over 2 Availability Zones. Automatic failover is handled at an infrastructure level, where AWS automatically starts up instances in the surviving Availability Zone in case of failure. Load balancers are automatically aware of any failovers, so no human intervention is required for reconfiguration.

The architecture is scalable and leverages features of the AWS such as the AWS Auto Scaling Groups to automatically scale up or down, based on metrics that are collected from the system, such as CPU or memory consumption. A WebLogic 12c Dynamic Cluster makes it very easy to instantiate new managed servers into the cluster when application traffic demands it.

Embodiments of the invention have the advantage of providing a framework and a platform that can coordinate between different identity parties with a central identity service that may be accessed through APIs that are open to authorised parties. Although identities may be stored centrally, in one preferred embodiment those identities may only be stored for a short time, for example 24 hours or 48 hours, and then deleted. There are therefore only available around the traveller's journey time. Alternatively, after that time the identities may be removed and stored elsewhere.

Thus embodiments of the invention provide a cloud based repository of identities that can be accessed, anywhere in the world, by authorised parties which may include governments, ports, including airports and sea ports, operators such as airlines shipping companies and airport flight handling companies, and governments. The system can be used to enrol travellers by storing and verifying their biometrics against those stored on an identity document and then associating them with a unique identifier. This information may then be shared with the traveller's destination port and any transit ports through which he or she will pass. Once the traveller has enrolled their identity is establish and does not have to be re-established as they pass through various checkpoints on their journey including baggage drop, passport control, boarding pass check and immigration.

The embodiment described is just one example of an embodiment of the invention and various modifications may be made without departing from the scope of the invention which is defined by the following claims.

The following numbered clauses are hereby included to provide further explanation of the invention
1. A system for managing identities of travellers, comprising
   a platform for sharing of identities with a plurality of parties external to the system and comprising:
   an identity management service for enrolling travellers receiving identity information from external providers and assigning unique identifiers to travellers;
   a biometric service in communication with the identity service for receiving biometric data from travellers' identity documents, and on enrolment of a traveller, performing a match with biometric data supplied by the traveller and the biometric data from the traveller's identity document, and if the match is successful, associating the traveller's ID with the biometric data supplied by the traveller; and
   an application programming interface (API) comprising a plurality of web services and an application software development kit, the API being open to approved parties external to the system.
2. A system according to clause 1, wherein the identity application service, the biometric service and the API are hosted in the cloud.
3. A system according to clause 1 or 2, wherein the API and the identity application service are configured to generate an identity for a traveller on enrolment of that traveller, the identity being passed to the biometric service for association with traveller biometric data.
4. A system according to clause 3, wherein, on enrolment of a traveller, the identity application service is configured to receive biometric data from an identity document of the traveller and biometric data captured by the traveller accessing the service, the identity application service further being configured to send the identity document biometric data and the captured biometric data to the biometric service for matching, and, on receipt of a match indication from the biometric service, to issue a unique identifier for the traveller and send the unique identifier to the biometric service for storage in association with the captured biometric data of the traveller.
5. A system according to clause 4, wherein the identity document biometric data and the captured biometric data comprise at least one a facial image, fingerprint data, iris data and voice data.
6. A system according to clauses 4 or 5, comprising a kiosk, self-service gate or an application running on a mobile device for capturing the identity document biometric data and the traveller's biometric data and sending the identity document biometric data and the captured biometric data to the API.
7. A system according to any of clauses 1 to 6, wherein the API includes an external identities API for sharing identities from identity providers external to the system with the identity service.
8. A system according to any of clauses 1 to 7, wherein the API comprises a security check API for communication with automated self-service gates for submission of face image data or boarding pass information.
9. A system according to any preceding clause, wherein the API comprises a booking and check-in API for enrolment of travellers and for passing unique identifiers between external operators and the identity application.
10. A system according to clause 4, wherein the API comprises a transfer API for communicating matching data between the biometric service, the identity service and the traveller.
11. A system according to any preceding clause, wherein the API comprises a border check API for submission of identities to the identity service by approved immigration authorities.
12. A system according to any preceding clause, wherein the API comprises a boarding check API for face matching by automatic self-service boarding gates.
13. A system according to clause 4, wherein the match is a one-to-one match.
14. A method of enrolling a traveller in an identity management system, the system comprising a platform for sharing of identities with a plurality of parties external to the system and comprising:
   an identity application service for enrolling travellers receiving identity information from external providers and assigning unique identifiers to travellers;
   a biometric service in communication with the identity service for receiving biometric data from travellers' identity documents, and on enrolment of a traveller, performing a match with biometric data supplied by the traveller and the biometric data from the traveller's identity document, and if the match is successful, associating the traveller's ID with the biometric data supplied by the traveller; and
   an application programming interface (API) comprising a plurality of web services and an application software development kit, the API being open to approved parties external to the system; the method comprising:
      submitting biometric data from an identity document of a traveller to the API, submitting biometric data captured from the traveller to the API;
      performing a match between the biometric data from the identity document and the captured biometric data and, if the match is made;
      assigning a unique identifier to the traveller; and
      storing the unique identifier with the captured biometric data.
15. A method according to clause 14, wherein the identity document biometric data and the captured biometric data are sent by the API to the biometric service and the match is performed by the biometric service, if the match is made, the identity service commits the captured biometric data to the biometric service and writes the unique identifier to the biometric service to create an association between the captured biometric data and the unique identifier.
16. A method according to clauses 14 or 15, wherein the biometric data from the identity document and the captured biometric data comprise at least one of facial data, fingerprint data, iris data or voice authentication data.
17. A method according to any of clauses 14 to 16, comprising submitting traveller destination and/or transit port data to the API with the identity document biometric data and the captured biometric data, and sending the captured biometric data and associated unique identifier to the destination port and/or the transit port.
18. A method according to clause 17, comprising, prior to sending the captured biometric data and associated unique identifier to the destination port and/or the transit port, determining whether the destination port and/or the transit port is subscribed to the identity management system.
19. A method according to any of clauses 14 to 18, wherein the identity document biometric data is read by a kiosk and communicated to the API and the traveller biometric data is captured by the kiosk and communicated to the API.
20. A method according to clause 19, wherein the traveller biometric data is captured by a camera in the kiosk.
21. A method according to any of clauses 14 to 18, wherein the identity document biometric data is read by an application running on a mobile device and communicated to the API and the traveller biometric data is captured by the mobile device and communicated to the API.
22. A method according to clause 21, wherein the traveller biometric data is captured by a camera in the mobile device.

## Claims

1. A system for managing identities of travellers, comprising
a platform for sharing of identities with a plurality of parties external to the system and comprising:
an identity management service for enrolling travellers receiving identity information from external providers and assigning unique identifiers to travellers;
a biometric service in communication with the identity service for receiving biometric data from travellers' identity documents, and on enrolment of a traveller, performing a match with biometric data supplied by the traveller and the biometric data from the traveller's identity document, and if the match is successful, associating the traveller's ID with the biometric data supplied by the traveller; and
an application programming interface (API) comprising a plurality of web services and an application software development kit, the API being open to approved parties external to the system.

2. A system according to claim 1, wherein the identity application service, the biometric service and the API are hosted in the cloud.

3. A system according to claim 1 or 2, wherein the API and the identity application service are configured to generate an identity for a traveller on enrolment of that traveller, the identity being passed to the biometric service for association with traveller biometric data and preferably, wherein on enrolment of a traveller, the identity application service is configured to receive biometric data from an identity document of the traveller and biometric data captured by the traveller accessing the service, the identity application service further being configured to send the identity document biometric data and the captured biometric data to the biometric service for matching, and, on receipt of a match indication from the biometric service, to issue a unique identifier for the traveller and send the unique identifier to the biometric service for storage in association with the captured biometric data of the traveller and preferably wherein the identity document biometric data and the captured biometric data comprise at least one a facial image, fingerprint data, iris data and voice data.

4. A system according to claim 3, comprising a kiosk, self-service gate or an application running on a mobile device for capturing the identity document biometric data and the traveller's biometric data and sending the identity document biometric data and the captured biometric data to the API.

5. A system according to any of claims 4, wherein the API includes an external identities API for sharing identities from identity providers external to the system with the identity service.

6. A system according to any of claims 5, wherein the API comprises a security check API for communication with automated self-service gates for submission of face image data or boarding pass information.

7. A system according to any preceding claim, wherein the API comprises a booking and check-in API for enrolment of travellers and for passing unique identifiers between external operators and the identity application.

8. A system according to claim 3, wherein the API comprises a transfer API for communicating matching data between the biometric service, the identity service and the traveller or/and wherein the match is a one-to-one match.

9. A system according to any preceding claim, wherein the API comprises a border check API for submission of identities to the identity service by approved immigration authorities.

10. A system according to any preceding claim, wherein the API comprises a boarding check API for face matching by automatic self-service boarding gates.

11. A method of enrolling a traveller in an identity management system, the system comprising a platform for sharing of identities with a plurality of parties external to the system and comprising:
an identity application service for enrolling travellers receiving identity information from external providers and assigning unique identifiers to travellers;
a biometric service in communication with the identity service for receiving biometric data from travellers' identity documents, and on enrolment of a traveller, performing a match with biometric data supplied by the traveller and the biometric data from the traveller's identity document, and if the match is successful, associating the traveller's ID with the biometric data supplied by the traveller; and
an application programming interface (API) comprising a plurality of web services and an application software development kit, the API being open to approved parties external to the system; the method comprising:
submitting biometric data from an identity document of a traveller to the API, submitting biometric data captured from the traveller to the API;
performing a match between the biometric data from the identity document and the captured biometric data and, if the match is made;
assigning a unique identifier to the traveller; and
storing the unique identifier with the captured biometric data.

12. A method according to claim 11, wherein the identity document biometric data and the captured biometric data are sent by the API to the biometric service and the match is performed by the biometric service, if the match is made, the identity service commits the captured biometric data to the biometric service and writes the unique identifier to the biometric service to create an association between the captured biometric data and the unique identifier.

13. A method according to claim 11 or 12, wherein the biometric data from the identity document and the captured biometric data comprise at least one of facial data, fingerprint data, iris data or voice authentication data.

14. A method according to any of claims 11 to 13, comprising submitting traveller destination and/or transit port data to the API with the identity document biometric data and the captured biometric data, and sending the captured biometric data and associated unique identifier to the destination port and/or the transit port and preferably further comprising, prior to sending the captured biometric data and associated unique identifier to the destination port and/or the transit port, determining whether the destination port and/or the transit port is subscribed to the identity management system.

15. A method according to any of claims 11 to 14, wherein the identity document biometric data is read by a kiosk and communicated to the API and the traveller biometric data is captured by the kiosk and communicated to the API and preferably wherein the traveller biometric data is captured by a camera in the kiosk.

16. A method according to any of claims 11 to 14, wherein the identity document biometric data is read by an application running on a mobile device and communicated to the API and the traveller biometric data is captured by the mobile device and communicated to the API and preferably wherein the traveller biometric data is captured by a camera in the mobile device.
